# EUROPEAN PATENT SPECIFICATION

(11) **EP 2 422 256 B1**
(45) Date of publication and mention of the grant of the patent: **02.08.2017**
(21) Application number: 09796062.9
(22) Date of filing: 20.10.2009
(51) Int. Cl.: G06F 1/16, G06F 3/01, G06F 3/048, G06K 9/00, G07C 9/00, G06F 21/00, H04M 1/667

(54) **FINGER RECOGNITION FOR AUTHENTICATION AND GRAPHICAL USER INTERFACE INPUT**
FINGERERKENNUNG ZUR AUTHENTIFIKATION UND EINGABE EINER GRAFISCHEN BENUTZEROBERFLÄCHE
RECONNAISSANCE DE DOIGT POUR UNE AUTHENTIFICATION ET UNE ENTRÉE D'INTERFACE UTILISATEUR GRAPHIQUE

(30) Priority: 21.04.2009 US 427108
(43) Date of publication of application: 29.02.2012
(73) Proprietor: Sony Ericsson Mobile Communications AB, 221 88 Lund (SE)
(72) Inventor: TSUDA, Takamoto, Zushi-city, 249-0006 (JP)
(74) Representative: Valea AB
(86) International application number: PCT/IB2009/054618
(87) International publication number: WO 2010/122380

(56) References cited:
- WO-A1-01/31788
- WO-A1-2007/140806
- US-A1- 2004 239 648
- US-A1- 2008 042 979

## Description

### BACKGROUND

In many types of devices, a user may provide input via a touch screen. The touch screen allows the user to interact with graphical user interface (GUI) objects that are shown on the screen display.

US2008/0042979-A1 discloses using a key or a clickable element (such as an icon) of a graphical user interface to produce more than one action based on the finger which has pressed or touched the key or clickable element.

US2004/0239648-A1 discloses an electronic display unit including a transparent finger touch sensor region that is seated above the display apparatus, which is responsible for determining the presence and absence of a finger and for generating fingerprint images when a finger is detected. The document further discloses a process for authenticating individuals and verifying their security privileges to access sensitive data, based on a finger-touch selection of an icon presented on the display apparatus. WO01/31788-A1 discloses a data entry system comprising a group of data symbols divided into subgroups. Each subgroup is associated with at least a portion of the user's finger. The system also comprises a keypad defining a plurality of keys, wherein each key contains at least one of the symbols. At least one finger recognition system is configured to recognize the portion of the finger when it touches a key, and to select the subgroup symbols associated with that portion of the finger interacting with that key.

WO2007/140806-A1 discloses a device that includes a fingerprint sensor and has a specific function to be performed associated with at least two of the fingerprints of an authorized user of the device.

### SUMMARY

According to one aspect of the present disclosure, a device may include a display and a processor. The display may include a first sensor for detecting a nearby finger and a second sensor for capturing an image of the nearby finger. The processor may be configured to obtain an image from the second sensor when the first sensor detects a finger, obtain identification information associated with the image, and perform a function associated with the obtained identification information and a GUI object when the finger touches the GUI object shown on the display.

Additionally, the device may include a cell phone, an electronic notepad, a gaming console, a laptop computer, a personal digital assistant, or a personal computer.

Additionally, the first sensor may include a touch screen; and the second sensor may include one of a scanner; a charge coupled device; an infrared sensor; or an acoustic sensor.

Additionally, the image may include at least one of a fingerprint, finger shape, or image of veins of the finger.

Additionally, the second sensor may be located with an action button area included within the display.

Additionally, the GUI objects may include at least one of a button; a menu item; icon; cursor; arrow; text box; image; text; or hyperlink.

Additionally, the processor may be further configured to register additional functions for the finger.

Additionally, the processor may be further configured to authenticate a user to whom the finger belongs.

Additionally, the function may include at least one of browsing a web page; placing a call; sending an email to a particular address; sending multimedia message; sending an instant message; viewing or editing a document; playing music or video; scheduling an event; or modifying an address book.

Additionally, the processor may be further configured to highlight the GUI object to convey to a user that the user may select the highlighted GUI object.

According to another aspect, a method may include detecting a finger's touch on a graphical user interface (GUI) object that is output on a display of a device, obtaining an image of the finger when the touch is detected, looking up identification information based on the image, using the identification information to determine an action that the device is to perform when the finger touches the GUI object, and performing the action.

Additionally, the action may includes one or more of loading a web page; placing a call to a particular user; opening an email application to compose an email to be sent to a particular address; sending a multimedia message to a user; sending an instant message to one or more users; loading a document for editing; playing music or video; scheduling an appointment; or inserting or deleting an entry from an address book.

Additionally, the method may further include authenticating a user based on the image.

Additionally, registering the finger may include receiving the identification information from a user, capturing a registration image of the finger, creating an association between the registration image and the identification information, and storing the registration image, the identification information, and the association between the registration image and the identification information.

Additionally, registering the finger may further include creating an association between the identification information, the action, and the GUI object.

Additionally, obtaining an image may include obtaining an image of veins of the finger, obtaining a fingerprint, or obtaining a shape of the finger.

Additionally, obtaining an image may include obtaining the image based on at least one of: reflected light from the finger, a reflected infrared signal, or a reflected acoustic signal.

According to yet another aspect, a computer-readable medium may include computer-executable instructions. Additionally, the computer-executable instructions may include instructions for obtaining an image of a finger from a sensor when a device detects a touch, retrieving identification information by looking up the identification information in a database based on the image, retrieving a list of functions that are available for selection by the finger, and highlighting, on a display, graphical user interface (GUI) objects that are associated with the functions. Additionally, the computer-executable instructions may further include instructions for performing one of the functions when the finger touches one of the GUI objects, the performed function being associated with the touched GUI object.

Additionally, the device may include one of a cell phone, an electronic notepad, a gaming console, a laptop computer, a personal digital assistant, or a personal computer.

Additionally, the computer-readable medium may further include instructions for associating the GUI objects, the identification information, and the functions.

The present invention relates more specifically to a device and to a method with the combination of features defined in the appended claims.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:
Fig. 1 illustrates the concepts described herein;
Fig. 2 is a diagram of an exemplary device that implements the concepts described herein;
Fig. 3 is a block diagram of the device of Fig. 2;
Fig. 4 is a diagram of exemplary components of an exemplary display screen of the device of Fig. 2;
Fig.5 is a block diagram of exemplary functional components of the device of Fig. 2;
Fig. 6 illustrates exemplary functions that are assigned to fingers by the device of Fig. 2;
Fig. 7 is a flow diagram of an exemplary process associated with finger registration;
Fig. 8 is a flow diagram of an exemplary process for identifying/recognizing a finger; and
Fig. 9 illustrates an example associated with identifying/recognizing a finger.

### DETAILED DESCRIPTION

The following detailed description refers to the accompanying drawings. The same reference numbers in different drawings may identify the same or similar elements. As used herein, the term "veins" may refer to blood vessels (e.g., capillaries, veins, etc.). In addition, the term "highlighting" may refer to applying a graphical effect to a graphical user interface (GUI) object (e.g., a button, text, an image, an icon, a menu item, a hyperlink, etc.) that is shown on a display. Applying the graphical effect (e.g., changing a color, orientation, size, underlining text, spot-lighting, flashing, etc.) to the GUI object may cause the graphical object to be more noticeable.

In the following, a device may identify one or more user's fingers that provide input to the device (e.g., a thumb of the right hand, an index finger of the left hand, etc.). Based on the identification, the device may authenticate the user and/or provide specific functionalities.

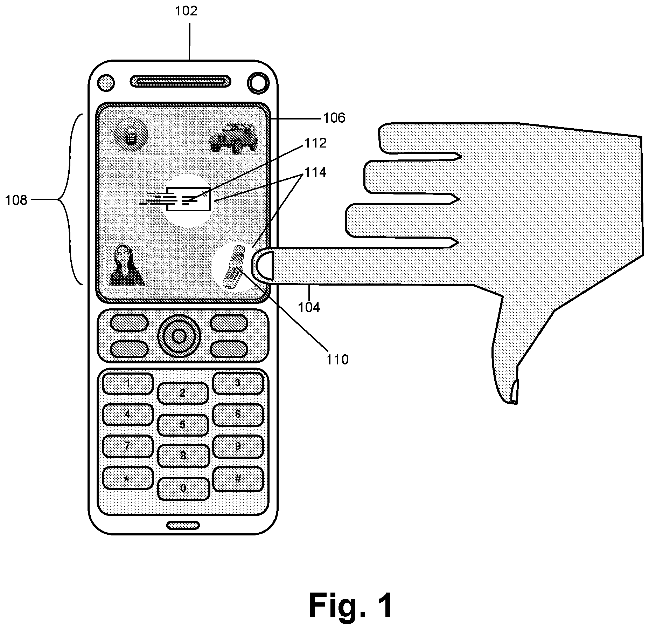

Fig. 1 illustrates one implementation of the above concept. Fig. 1 shows a device 102 that is capable of recognizing/identifying fingers for authentication and/or GUI interaction. Device 102 may include a touch screen 106, which, in turn, may display GUI objects 108. Although GUI objects 108 may be implemented as buttons, menu items, selectable list box, etc., GUI objects 108 in Fig. 1 are illustrated as icons, two of which are labeled as icons 110 and 112.

In the above, when a finger 104 approaches touch screen 106, device 102 may sense and identify finger 104 based on an image of finger 104 (e.g., fingerprint, shape, image of veins of finger 104, etc.). For example, device 102 may match the image of finger 104's veins to a database of images of veins associated with authorized users of device 102.

Upon identifying finger 104, device 102 may authenticate the user to which finger 104 belongs and/or provide specific functions that are associated with finger 104. For example, in Fig. 1, device 102 may recognize that finger 104 belongs to Mr. Takamoto, may authenticate Mr. Takamoto, and may allow finger 104 to activate icons 110 and 112. To allow the user to view what icons finger 104 can activate, device 102 may highlight icons 110 and 112. In Fig. 1, the highlight is shown as circles 114 that become visible when finger 104 approaches touch screen 106, effectively spotlighting icons 110 and 112. When finger 104 touches and selects icon 110, device 102 may place a call or display a menu for placing the call.

In the above, device 102 may perform a different function when a different finger (e.g., a ring finger) touches icon 110. More generally, a single GUI object may support different functions, depending on which finger activates the GUI object.

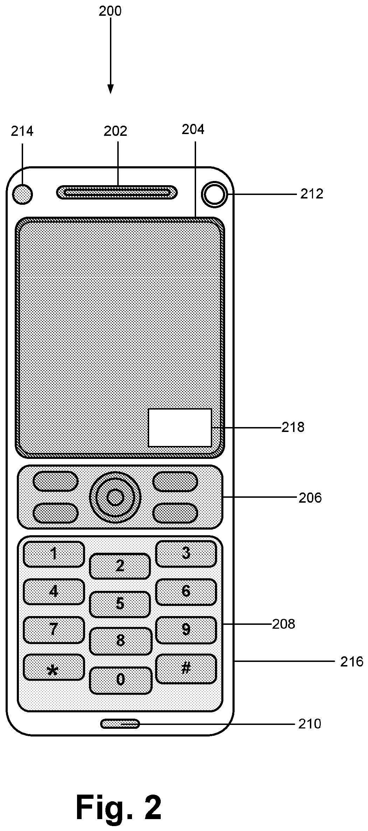

Fig. 2 is a diagram of an exemplary device 200 in which the concepts described herein may be implemented. Device 200 may include any of the following devices: a mobile telephone; a cellular phone; a personal communications system (PCS) terminal that may combine a cellular radiotelephone with data processing, facsimile, and/or data communications capabilities; an electronic notepad, a laptop, and/or a personal computer; a personal digital assistant (PDA) that can include a telephone; a gaming device or console; a peripheral (e.g., wireless headphone); a digital camera; or another type of computational or communication device that includes a touch screen and is capable of obtaining an image of finger (e.g., image of veins of the finger, finger shape, fingerprint, etc.).

In this implementation, device 200 may take the form of a mobile phone (e.g., a cell phone). As shown in Fig. 2, device 200 may include a speaker 202, a display 204, control buttons 206, a keypad 208, a microphone 210, sensors 212, a front camera 214, and a housing 216. Speaker 202 may provide audible information to a user of device 200.

Display 204 may provide visual information to the user, such as an image of a caller, video images, or pictures. In addition, display 204 may include a touch screen for providing input to device 200. Furthermore, display 204 may be capable of obtaining one or more images of a finger that is proximate to the surface of display 204.

In some implementations, instead of whole display 204 being capable of obtaining the images of a finger, display 204 may include one or more action button areas 218 in which display 204 can obtain an image of a finger. Display 204 may provide hardware/software to detect the image (e.g., image of veins of the finger) in action button area 218. In different implementations, action button area 218 may be located in a different screen area, be smaller, be larger, and/or have a different shape (e.g., circular, elliptical, square, etc.) than that illustrated in Fig. 2.

Control buttons 206 may permit the user to interact with device 200 to cause device 200 to perform one or more operations, such as place or receive a telephone call. Keypad 208 may include a telephone keypad. Microphone 210 may receive audible information from the user. Sensors 212 may collect and provide, to device 200, information (e.g., acoustic, infrared, etc.) that is used to aid the user in capturing images or in providing other types of information (e.g., a distance between a user and device 200). Front camera 214 may enable a user to view, capture and store images (e.g., pictures, video clips) of a subject in front of device 200. Housing 216 may provide a casing for components of device 200 and may protect the components from outside elements.

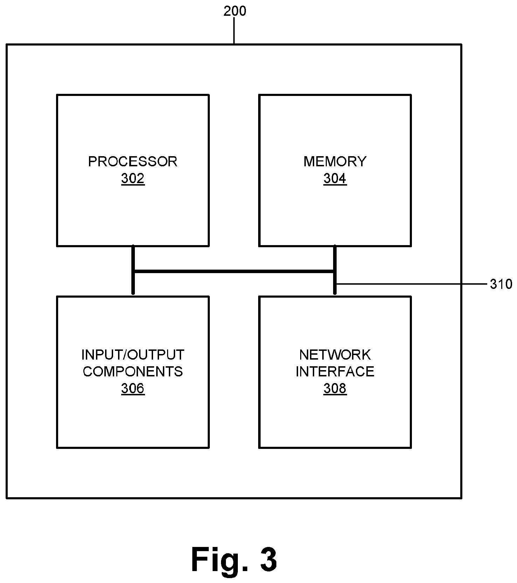

Fig. 3 is a block diagram of the device of Fig. 2. As shown in Fig. 3, device 200 may include a processor 302, a memory 304, input/output components 306, a network interface 308, and a communication path 310. In different implementations, device 200 may include additional, fewer, or different components than the ones illustrated in Fig. 2. For example, device 200 may include additional network interfaces, such as interfaces for receiving and sending data packets.

Processor 302 may include a processor, a microprocessor, an Application Specific Integrated Circuit (ASIC), a Field Programmable Gate Array (FPGA), and/or other processing logic (e.g., audio/video processor) capable of processing information and/or controlling device 200. Memory 304 may include static memory, such as read only memory (ROM), and/or dynamic memory, such as random access memory (RAM), or onboard cache, for storing data and machine-readable instructions. Memory 304 may also include storage devices, such as a floppy disk, CD ROM, CD read/write (R/W) disc, and/or flash memory, as well as other types of storage devices.

Input/output components 306 may include a display screen (e.g., display 106, display 204, etc.), a keyboard, a mouse, a speaker, a microphone, a Digital Video Disk (DVD) writer, a DVD reader, Universal Serial Bus (USB) lines, and/or other types of components for converting physical events or phenomena to and/or from digital signals that pertain to device 200.

Network interface 308 may include any transceiver-like mechanism that enables device 200 to communicate with other devices and/or systems. For example, network interface 308 may include mechanisms for communicating via a network, such as the Internet, a terrestrial wireless network (e.g., a WLAN), a cellular network, a satellite-based network, a WPAN, etc. Additionally or alternatively, network interface 308 may include a modem, an Ethernet interface to a LAN, and/or an interface/ connection for connecting device 200 to other devices (e.g., a Bluetooth interface).

Communication path 310 may provide an interface through which components of device 200 can communicate with one another.

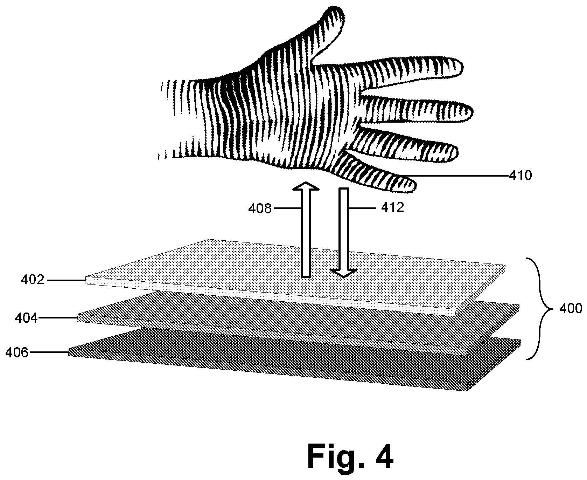

Fig. 4 is a diagram of exemplary components of a display screen 400 of device 200. As shown, display screen 400 may include a touch panel 402, display panel 404, and scanning panel 406. Depending on the implementation, display screen 400 may include additional, fewer, or different components than those illustrated in Fig. 4 (e.g., additional panels, screens, etc.).

Touch panel 402 may include a transparent panel/surface for locating the position of a finger or an object (e.g., stylus) when the finger/object is touching or is close to touch panel 402. Touch panel 402 may overlay display panel 404, but still allow images on display panel 404 to be viewed. In addition, touch panel 402 may allow external light to impinge on scanning panel 406. In one implementation, touch panel 404 may generate an electric field at its surface and detect changes in capacitance and the electric field due to a nearby object. A separate processing unit (not shown) that is attached to an output of touch panel 402 may use the output of touch panel 402 to generate the location of disturbances in the electric field, and thus the location of the object.

Display panel 404 may include a liquid crystal display (LCD), organic light-emitting diode (OLED) display, and/or another type of display that is capable of providing images to a viewer. In some implementations, display panel 404 may permit light (e.g., infrared) to pass through its surface to scanning panel 406. Scanning panel 406 may include components to capture an image of a finger (e.g., finger's shape, fingerprint, an image of veins of the finger) that is close to the surface of display screen 400. In one implementation, scanning panel 406 may include arrays of charge-coupled devices (CCDs) configured to capture the image. In another implementation, scanning panel 406 may include a source of light that may emanate from scanning panel 406 and pass through display panel 404 and touch panel 402 in the direction of arrow 408 illustrated in Fig. 4. When light that is reflected from a finger 410 arrives at scanning panel 406 through touch panel 402 and display panel 404, scanning panel 406 may capture an image of finger 412. In still another implementation, scanning panel 406 may emit acoustic waves to a finger that touches the surface of touch panel 402 and obtain the image of finger 412 based on reflected waves.

In some implementations, in place of scanning panel 406, display screen 400 may include a specialized hardware component that is limited to an area, such as action button area 218 in display 204, for obtaining images of a finger. In still other implementations, touch panel 402 and/or display panel 404 may include integrated, specialized area(s) that either spans the whole surface area of display screen 400 or a limited area(s) (e.g., one or more of action button area 218), for obtaining the images.

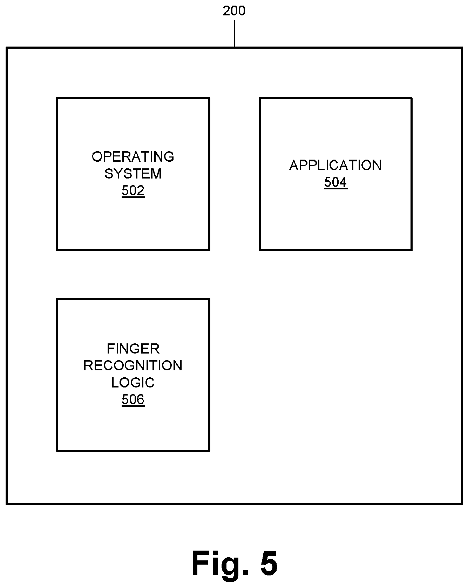

Fig. 5 is a block diagram illustrating exemplary functional components of device 200. As shown, device 200 may include an operating system 502, application 504, and finger recognition logic 506. Operating system 502 may manage hardware and software resources of device 200. Operating system 502 may manage, for example, a file system, device drivers, communication resources (e.g., transmission control protocol (TCP)/IP stack), event notifications, etc. Application 504 (e.g., an email client, web browser, instant messenger, media player, phone, address book, word processor, etc.) may include software components for performing a specific set of tasks (e.g., send an email, provide sound upon receiving a call, schedule an appointment for a meeting, browse a web, etc.).

Finger recognition logic 506 may include hardware and/or software components for obtaining an image of a finger and identifying a specific finger by matching the image against a database of finger images. In some implementations, based on the identification, finger recognition logic 506 may also authenticate the user.

In addition, finger recognition logic 506 may allow a user to register one or more images of fingers of the user and associate each of the images to an identifier (e.g., "right thumb," "left index finger," etc.) and/or a user. Finger recongition logic 506 may provide a GUI to register the images, and may store the images in a database. Once the registration is complete, application 504 and/or finger recognition logic 506 may allow the user to associate the registered images with a short cut and/or particular tasks that are associated with application 504/finger recognition logic 506.

Depending on the implementation, device 200 may include fewer, additional, or different functional components than those illustrated in Fig. 5. For example, in one implementation, device 200 may include additional applications, databases, etc. In addition, one or more functional components of device 200 may provide the functionalities of other components. For example, in a different implementation, operating system 502 and/or application 504 may provide the functionalities of finger recognition logic 506. In such an implementation, device 200 may or may not include finger recognition logic 506. In another implementation, application 504 may use finger recognition logic 506 to perform a task. For example, assume that application 504 is a word processor. When a user's finger approaches the display screen of device 200, application 504 may use finger recognition logic 506 to identify the finger, and enable selected menu components (e.g., edit, view, tools, etc.).

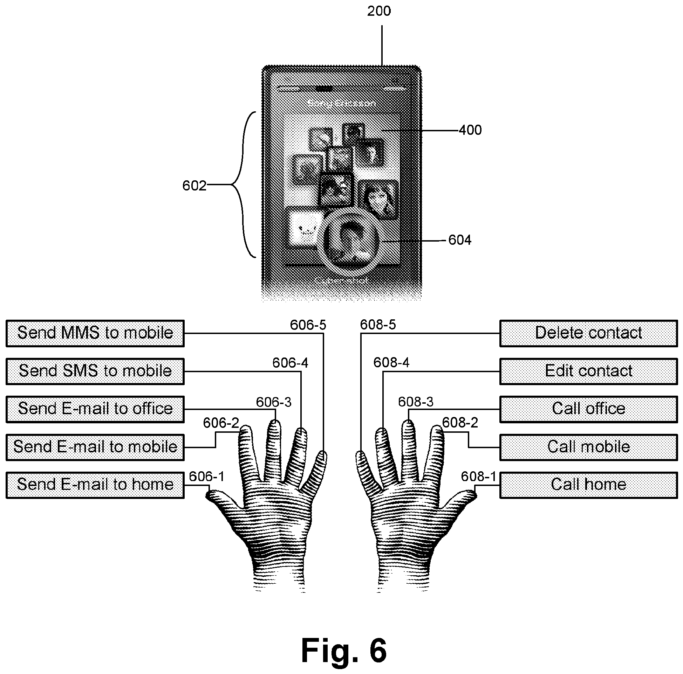

Fig. 6 illsutrates exemplary functions that may be assigned to different fingers by finger recognition logic 506. As shown, display screen 400 of device 200 may show icons 602, one of which is depicted as icon 604 that is highlighted. In Fig. 6, each of icons 602 may be associated with a particular entry in an address book (e.g., "Jane," "mother," "John," "Mr. Takamoto," etc.).

As further shown in Fig. 6, finger recognition logic 506 may associate each of fingers 606-1 through 606-5 (collectively referred as "left fingers 606") and 608-1 through 608-5 (collectively referred as "right fingers 608") with functions that are indicated by text in shaded rectangles.

In the example, left thumb 606-1, left index finger 606-2, left middle finger 606-3, left ring finger 606-4, left little finger 606-5, right thumb 608-1, right index finger 608-2, right middle finger 608-3, right ring finger 608-4, and right little finger 608-5 are associated with, respectively, each of the following functionalities that is triggered when the finger touches icon 604: sending an email message to home email address; sending an email message to a mobile phone; sending an email message to the office; sending an email message to the mobile phone; sending a multimedia message (MMS) to the mobile phone; calling a home phone; calling the mobile phone; calling the office; editing a contact list; and deleting an entry in the contact list. Although not illustrated in Fig. 6, fingers 606 and 608 may be associated with other types of functions, such as functions related to browsing/loading a web page, using an instant message (e.g., sending an instant message), editing/viewing a document, playing music or video, scheduling an appointment on a calendar, etc.

The associations between the functionalities and fingers 606 and 608 may be made via a GUI that permits a user to register images of fingers 606 and 608. The registration may associate the images with identifiers and/or specific functions. For example, a user may associate an image of veins in thumb 606-1 with icon 604 and with sending an email message to a home email address associated with a selected contact. After the registration, when thumb 606-1 approaches display screen 400, icon 604 may be highlighted (e.g., a circle around the icon). When the user touches icon 604, device 200 may open a window for the user to type in a message whose destination address is the user's home email address.

### EXEMPLARY PROCESSES FOR FINGER RECOGNITION/IDENTIFICATION

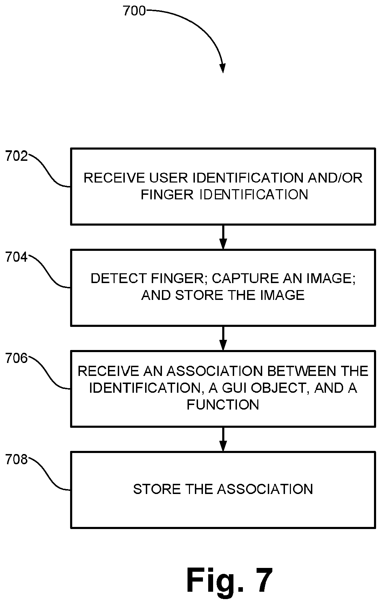

Fig. 7 is flow diagram of an exemplary process 700 associated with finger registration. Registration process 700 may result in storing a finger image in a database that may be searched to identify a matching image.

Assume that finger recognition logic 506 is displyaing a GUI for finger registration. Process 700 may start with finger recognition logic 506 receiving a user identification information (e.g., a user name, address, etc.) and/or finger identification information (block 702). For instance, a user may input personal information (e.g., contact information, user id, etc.) into text boxes. In another example, the user may place a check in a checkbox that is associated with a specific finger (e.g., a checkbox next to "left index finger").

Device 200 may detect a finger, capture an image associated with the finger, and store the image (block 704). For example, when left index finger 606-2 moves toward display screen 400, device 200 may detect finger 606-2. In addition, via scanning panel 406, device 200 may capture an image of finger 606-2. Once the image is captured, device 200 may store the image and the identification information in a database (block 704). Given a matching image, device 200 may retrieve the identification information from the database.

Device 200 may receive an association between the finger identification information (or the user identification), a GUI object (or another type of object), and a function (block 706). For example, via a GUI, the user may select a particular finger and a function that the user wishes the finger to be associated with when the finger touches a specific type of GUI object (e.g., a menu item, a button, an icon, etc.). For example, via the GUI, the user may select left index finger 606-2 as a finger that may activate icon 604. In addition, the user may select a "Send an email message to home" as the function that device 200 will perform when left index finger 606-2 touches icon 604.

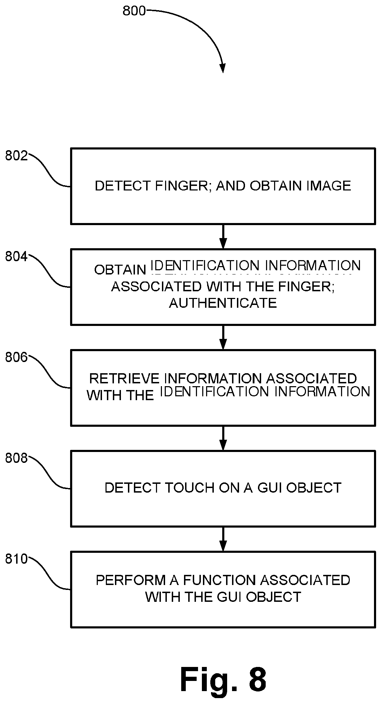

Device 200 may store the association between the identification information, the GUI object (or type of GUI object), and/or the function (block 708). The stored information may later be searched based on the identification information. Fig. 8 is a flow diagram of an exemplary process 800 for identifying/ recognizing a finger. Assume that finger recognition logic 506 is displaying a GUI for a specific task. Process 800 may start with device 200 detecting a finger that is proximate to a surface of its display screen (block 802). For example, device 200 may detect left index finger 606-2 that is close to or touching the surface of display screen 400.

Device 200 may obtain an image of the finger (block 802). For example, when device 200 detects that left index finger 606-2, device 200 may obtain a fingerprint or an image of veins of finger 606-2.

Device 200 may obtain identification information associated with the finger (block 804). To obtain the identification information, device 200 may search a database of finger images and associated identification information (see blocks 702 and 704). In some implementations, device 200 may also authenticate the user based on the identification information (block 804). Depending on the result of the authentication, device 200 may allow or prevent the user from accessing specific functions and/or from further using device 200.

Device 200 may retrieve information associated with the identification information (block 806). Using the identification information, device 200 may search associations that are stored in device 200 (see block 706). More specifically, using the identification information as a key, device 200 may retrieve functions and/or GUI objects that are associated with the identification information. In addition, depending on the implemenation, device 200 may perform an action that pertains to the retrieved GUI objects. For instance, assume that three icons are associated with left index finger 606-2. Device 200 may retrieve the three icons based on the identification information for finger 606-2. In this case, device 200 may perform an action, such as highlighting the three icons to indicate that the three icons are available for the user to activate.

Device 200 may detect user's touch on one of GUI objects that are associated with the identification information (block 808). Continuing with the preceding example, when the user touches one of the three icons, device 200 may detect the touch and identify the touched GUI object.

Device 200 may perform a function associated with the selected GUI object based on the identified finger (block 810). Still continuing with the preceding example, assume that "sending an email to John" function is associated with the identification information for the user's left index finger and with the selected GUI object. Upon detecting the touch on the GUI object, device 200 may prepare a new email message to be sent to John, with the body of the new email message to be provided by the user.

In process 800, GUI objects may be retrieved based on the finger's identification. In a different implementation, device 200 may identify a GUI object that is selected by a finger. Once the selected GUI object is identified, device 200 may obtain the identification information for the finger and use the identification information to determine what function may be performed when the specific finger touches the GUI object. Note that, depending on the finger, a different function may be performed.

### EXAMPLE

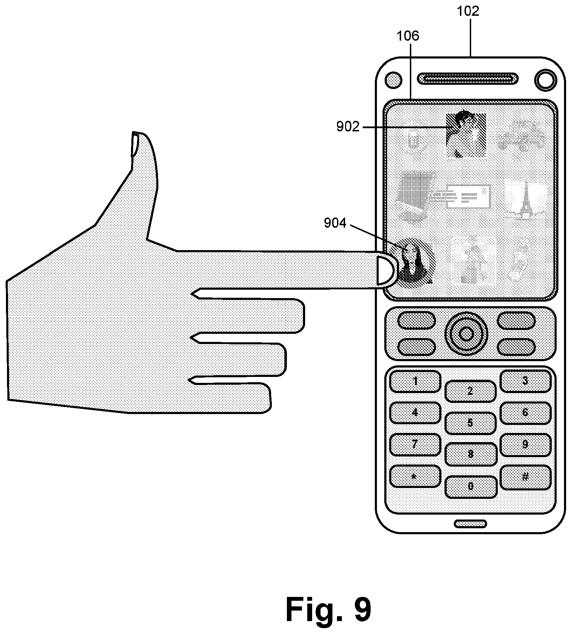

Fig. 9 illustrates an example associated with recognizing/identifying a finger. The example is consistent with exemplary processes 700 and 800 described above with reference to Figs. 7 and 8. Fig. 9 shows device 102. Assume that Mr. Takamoto is driving an automobile and that Mr. Takamoto's left hand is engaged in steering the vehicle. Also assume that Mr. Takamoto's right index finger is registered with icons 902 and 904 shown in Fig. 9. Icons 902 and 904 are associated with calling Jeanette and calling Olga, respectively. Other fingers are also registered with icons 902 and 904, but for different functions (e.g., send an email).

While driving the car, Mr. Takamoto decides to call Jeanette, and moves his right index finger close to the surface of display 106 of device 102. Device 102 obtains an image of veins of Mr. Takamoto's right index finger, and retrieves information that identifies Mr. Takamoto. In addition, device 102 authenticates Mr. Takamoto, and identities icons 902 and 904 as GUI objects that are avaialable for Mr. Takamoto's right index finger to activate.

As illsutrated in Fig. 9, device 102 shows icons 902 and 904 and grays out other icons. When Mr. Takamoto touches icon 902, device 102 detects Mr. Takamoto's touch, and places a call to Jeanette.

### CONCLUSION

The foregoing description of implementations provides illustration, but is not intended to be exhaustive or to limit the implementations of the invention, the scope of which is defined by the appended claims, to the precise form disclosed. Modifications and variations are possible in light of the above teachings or may be acquired from practice of the teachings.

For example, while series of blocks have been described with regard to the exemplary processes illustrated in Figs. 7 and 8, the order of the blocks may be modified in other implementations. In addition, non-dependent blocks may represent acts that can be performed in parallel to other blocks.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.
No element, act, or instruction used in the present application should be construed as critical or essential to the implementations described herein unless explicitly described as such. Also, as used herein, the article "a" is intended to include one or more items. Where one item is intended, the term "one" or similar language is used. Further, the phrase "based on" is intended to mean "based, at least in part, on" unless explicitly stated otherwise.

## Claims

1. A device (102, 200) comprising:
a display (204) configured to present a plurality of graphical user interface objects (108, 110, 112, 902, 904), the display (204) including:
a first sensor for detecting a finger (104, 606) located near a surface of the display (204); and
a second sensor for capturing an image of the finger when the first sensor detects the finger located near the surface of the display (204); and
a processor (302) to:
obtain, based on the image, an identity of the finger, of a plurality of fingers of a user,
obtain identification information, for the user, associated with the finger,
selectively highlight, based on the identification information, graphical user interface objects, of the plurality of graphical user interface objects,
identify a particular function, of a plurality of functions corresponding to the highlighted graphical user interface objects, that is associated with the identification information;
detect a touch, at one of the highlighted graphical user interface objects, on the display (204); and
perform, based on the touch, the particular function.

2. The device (200) of claim 1, wherein the device (200) includes;
a cell phone, an electronic notepad, a gaming console, a laptop computer, a personal digital assistant, or a personal computer.

3. The device (200) of claim 1, wherein the first sensor includes a touch screen (106);
and the second
sensor includes one of:
a scanner; a charge coupled device; an infrared sensor; or an acoustic sensor.

4. The device (200) of claim 1, wherein the image includes at least one of:
a fingerprint, finger shape, or image of veins of the finger.

5. The device (200) of claim 1, wherein the second sensor is located with an action button area
included within the display (204).

6. The device (200) of claim 1, wherein the GUI objects include at least one of:
a button; a menu item; icon; cursor; arrow; text box; image; text; or hyperlink.

7. The device (200) of claim 1, wherein the processor (302) is further configured to:
authenticate the user based on the identification information.

8. The device (200) of claim 1, wherein the particular function includes at least one of:
browsing a web page; placing a call; sending an email to a particular address; sending a multimedia message; sending an instant message; viewing or editing a document; playing music or video; scheduling an event; or modifying an address book.

9. A method (800) comprising:
Displaying via a display screen (204), a plurality of graphical user interface objects;
detecting (802) a finger that is proximate to a surface of the display screen (204);
capturing (802) an image of the finger when the finger proximate to the surface of the display screen (204) is detected;
looking up (804) identification information based on the captured image; identifying (804), based on the identification information, the finger to be a particular finger of different fingers of a particular user;
selectively highlighting (806) at least one of the plurality of graphical user interface objects, that is associated with the identification information;
detecting a touch (808) at one of the highlighted graphical user interface objects;
identifying different functions, corresponding to the different fingers of the particular user, that are associated with the touched graphical user interface object; and
performing (810) a particular function, of the different functions, corresponding to the identified finger associated with the touched graphical user interface object.

10. The method (800) of claim 9, wherein the particular function includes one or more of:
loading a web page; placing a call to a particular user; opening an email application to compose an email to be sent to a particular address; sending a multimedia message to a user device; sending an instant message to one or more user devices; loading a document for editing; playing music or video; scheduling an appointment; or inserting or deleting an entry from an address book.

11. The method (800) of claim 9, wherein the method further includes:
authenticating (804) the particular user based on the image.

12. The method (800, 700) of claim 9, further comprising:
receiving (702) the identification information from the particular user;
capturing (704) a registration image of the finger;
creating an association between the registration image and the identification information;
storing (708) the registration image, the identification information, and the association between the registration image and the identification information.

13. The method (800, 700) of claim 12, further comprising:
creating an association between the identification information, the particular function, and the graphical user interface object.

14. The method (800) of claim 9, wherein capturing an image includes:
obtaining an image of veins of the finger;
obtaining a fingerprint; or
obtaining a shape of the finger.

15. The method (800) of claim 9, wherein capturing an image includes:
obtaining the image based on at least one of: reflected light from the finger, a reflected infrared signal, or a reflected acoustic signal.

## Patentansprüche

1. Gerät (102, 200), umfassend:
eine Anzeige (204), die konfiguriert ist, mehrere graphische Benutzeroberflächenobjekte (108, 110, 112, 902, 904) darzustellen, wobei die Anzeige (204) aufweist:
einen ersten Sensor zum Detektieren eines Fingers (104, 606), der sich in der Nähe einer Fläche der Anzeige (204) befindet; und
einen zweiten Sensor zum Erfassen eines Bildes des Fingers, wenn der erste Sensor den Finger, der sich in der Nähe einer Fläche der Anzeige (204) befindet, detektiert; und
einen Prozessor (302) zum:
Erhalten, basierend auf das Bild, einer Identität des Fingers, von mehreren Fingern eines Benutzers,
Erhalten von Identifikationsinformation, für den Benutzer, die mit dem Finger assoziiert ist,
selektives Hervorheben, basierend auf die Identifikationsinformation, von grafischen Benutzeroberflächenobjekten der mehreren graphischen Benutzeroberflächenobjekten,
Identifizieren einer bestimmten Funktion, aus mehreren Funktionen, die den hervorgehobenen grafischen Benutzeroberflächenobjekten entsprechen, die mit der Identifikationsinformation assoziiert ist;
Detektieren einer Berührung an einem der hervorgehobenen grafischen Benutzeroberflächenobjekte auf der Anzeige (204); und
Durchführen, basierend auf der Berührung, der bestimmten Funktion.

2. Gerät (200) nach Anspruch 1, wobei das Gerät (200) aufweist;
ein Mobiltelefon, einen elektronischen Notizblock, eine Spielkonsole, einen Laptop-Computer, einen persönlichen digitalen Assistenten, oder einen Personal Computer.

3. Gerät (200) nach Anspruch 1, wobei der erste Sensor einen Touchscreen (106) aufweist; und der zweite Sensor eines von dem Folgenden aufweist:
ein Scanner; ein ladungsgekoppeltes Gerät; ein Infrarotsensor; oder ein akustischer Sensor.

4. Gerät (200) nach Anspruch 1, wobei das Bild mindestens eines von dem Folgenden aufweist:
ein Fingerabdruck, eine Fingerform, oder ein Bild von Venen des Fingers.

5. Gerät (200) nach Anspruch 1, wobei der zweite Sensor mit einem in der Anzeige (204) enthaltenen Aktionsknopfbereich angeordnet ist.

6. Gerät (200) nach Anspruch 1, wobei die GUI-Objekte mindestens eines von dem Folgenden aufweisen:
ein Knopf; ein Menüelement; ein Symbol; ein Cursor; ein Pfeil; ein Textfeld; ein Bild; Text; oder ein Hyperlink.

7. Gerät (200) nach Anspruch 1, wobei der Prozessor (302) ferner konfiguriert ist, um den Benutzer basierend auf der Identifikationsinformation zu authentifizieren.

8. Gerät (200) nach Anspruch 1, wobei die bestimmte Funktion mindestens eines von dem Folgenden aufweist:
Browsen einer Webseite; Tätigen eines Anrufs; Senden einer E-Mail an eine bestimmte Adresse; Senden einer Multimedianachricht; Senden einer Sofortnachricht; Anzeigen oder Bearbeiten eines Dokuments; Abspielen von Musik oder Video; Planen eines Ereignisses; oder Modifizieren eines Adressbuchs.

9. Verfahren, umfassend:
Anzeigen, über einen Bildschirm (204), von mehreren graphischen Benutzeroberflächenobjekten;
Detektieren (802) eines Fingers, der sich benachbart zu einer Fläche des Bildschirms (204) befindet;
Erfassen (802) eines Bildes des Fingers, wenn der Finger benachbart zu der Fläche des Bildschirms (204) detektiert wird;
Nachschauen (804) von Identifikationsinformation, die auf dem erfassten Bild basiert;
Identifizieren (804), basierend auf der Identifikationsinformation, dass der Finger ein bestimmter Finger von unterschiedlichen Fingern eines bestimmten Benutzers ist;
selektives Hervorheben (806) mindestens eines der mehreren graphischen Benutzeroberflächenobjekte, das mit der Information assoziiert ist;
Detektieren einer Berührung (808) an einem der hervorgehobenen graphischen Benutzeroberflächenobjekte;
Identifizieren von unterschiedlichen Funktionen, die den unterschiedlichen Fingern des bestimmten Benutzers entsprechen, die mit den berührten grafischen Benutzeroberflächenobjekten assoziiert sind; und
Durchführen (810) einer bestimmten Funktion von den unterschiedlichen Funktionen, die dem identifizierten Finger entspricht, der mit dem berührten grafischen Benutzeroberflächenobjekt assoziiert ist.

10. Verfahren (800) nach Anspruch 9, wobei die bestimmte Funktion eines oder mehreres von dem Folgenden aufweist:
Laden einer Webseite; Tätigen eines Anrufes an einen bestimmten Benutzer; Öffnen einer E-Mail-Anwendung, um eine E-Mail zu erstellen, die an eine bestimmte Adresse gesendet werden soll; Senden einer Multimedianachricht an ein Benutzergerät; Senden einer Sofortnachricht an eines oder mehrere Benutzergeräte; Laden eines Dokuments zum Bearbeiten; Abspielen von Musik oder Video; Planen einer Verabredung; oder Einfügen oder Löschen eines Eintrags in einem Adressbuch.

11. Verfahren (800) nach Anspruch 9, wobei das Verfahren ferner aufweist:
Authentifizieren (804) des bestimmten Benutzers basierend auf dem Bild.

12. Verfahren (800, 700) nach Anspruch 9, ferner umfassend:
Empfangen (702) der Identifikationsinformation von dem bestimmten Benutzer;
Erfassen (704) eines Registrierungsbildes des Fingers;
Erzeugen einer Assoziierung zwischen dem Registrierungsbild und der Identifikationsinformation;
Speichern (708) des Registrierungsbildes, der Identifikationsinformation, und der Assoziierung zwischen dem Registrierungsbild und der Identifikationsinformation.

13. Verfahren (800, 700) nach Anspruch 12, ferner umfassend:
Erzeugen einer Assoziierung zwischen der Identifikationsinformation, der bestimmten Funktion, und dem grafischen Benutzeroberflächenobjekt.

14. Verfahren (800) nach Anspruch 9, wobei das Erfassen eines Bildes aufweist:
Erhalten eines Bildes von Venen des Fingers zu erhalten;
Erhalten eines Fingerabdrucks; oder
Erhalten einer Form des Fingers.

15. Verfahren (800) nach Anspruch 9, wobei das Erfassen eines Bildes aufweist:
Erhalten des Bildes basierend auf mindestens eines von dem Folgenden:
reflektiertes Licht von dem Finger, ein reflektiertes Infrarotsignal, oder ein reflektiertes akustisches Signal.

## Revendications

1. Dispositif (102, 200) comprenant :
un affichage (204) configuré pour présenter une pluralité d'objets d'interface utilisateur graphique (108, 110, 112, 902, 904), l'affichage (204) comprenant :
un premier capteur pour détecter un doigt (104, 606) situé à proximité d'une surface de l'affichage (204) ; et
un second capteur pour capturer une image du doigt lorsque le premier capteur détecte le doigt situé à proximité de la surface de l'affichage (204) ; et
un processeur (302) pour :
obtenir, sur la base de l'image, une identité du doigt d'une pluralité de doigts d'un utilisateur,
obtenir des informations d'identification pour l'utilisateur associées au doigt,
accentuer sélectivement, sur la base des informations d'identification, des objets d'interface utilisateur graphique de la pluralité d'objets d'interface utilisateur graphique,
identifier une fonction particulière d'une pluralité de fonctions correspondant aux objets d'interface utilisateur graphique accentués, qui est associée aux informations d'identification ;
détecter une touche, sur l'un des objets d'interface utilisateur graphique accentués, sur l'affichage (204) ; et
effectuer, sur la base de la touche, la fonction particulière.

2. Dispositif (200) selon la revendication 1, dans lequel le dispositif (200) comprend :
un téléphone cellulaire, un bloc-notes électronique, une console de jeu, un ordinateur de bureau, un assistant numérique personnel ou un ordinateur personnel.

3. Dispositif (200) selon la revendication 1, dans lequel le premier capteur comprend un écran tactile (106) ; et le second capteur comprend l'un des dispositifs suivants :
un scanner; un dispositif à couplage de charge; un capteur infrarouge; ou un capteur acoustique.

4. Dispositif (200) selon la revendication 1, dans lequel l'image comprend au moins l'une des suivantes :
une empreinte de doigt, une forme de doigt ou des images de veines du doigt.

5. Dispositif (200) selon la revendication 1, dans lequel le second capteur est situé avec une zone de bouton d'action incluse dans l'affichage (204).

6. Dispositif (200) selon la revendication 1, dans lequel les objets GUI comprennent au moins l'un des suivants :
un bouton ; un article de menu ; une icone ; un curseur ; une flèche ; une boîte de texte ; une image ; un texte ; ou une hyperliaison.

7. Dispositif (200) selon la revendication 1, dans lequel le processeur (302) est en outre configuré pour :
authentifier l'utilisateur sur la base des informations d'identification.

8. Dispositif (200) selon la revendication 1, dans lequel la fonction particulière comprend au moins l'une des suivantes :
la navigation sur une page web; le placement d'un appel ; l'envoi d'un e-mail à une adresse particulière; l'envoi d'un message multimédia ; l'envoi d'un message instantané; l'observation ou l'édition d'un document; la reproduction de musique ou de vidéo; la programmation d'un événement; ou la modification d'un carnet d'adresses.

9. Procédé (800) comprenant :
un affichage via un écran d'affichage (204) d'une pluralité d'objets d'interface utilisateur graphique ;
la détection (802) d'un doigt qui est à proximité d'une surface de l'écran d'affichage (204) ;
la capture (802) d'une image du doigt lorsque le doigt à proximité de la surface de l'écran d'affichage (204) est détecté ;
la consultation (804) d'informations d'identification sur la base de l'image capturée ;
l'identification (804) sur la base des informations d'identification du doigt comme étant un doigt particulier de différents doigts d'un utilisateur particulier ;
l'accentuation sélective (806) d'au moins l'un de la pluralité d'objets d'interface utilisateur graphique, qui est associé aux informations d'identification ;
la détection d'une touche (808) sur l'un des objets d'interface utilisateur graphique accentués ;
l'identification de différentes fonctions correspondant aux différents doigts de l'utilisateur particulier qui sont associés à l'objet d'interface utilisateur graphique effleuré ; et
la réalisation (810) d'une fonction particulière des différentes fonctions correspondant au doigt identifié associé à l'objet d'interface d'utilisateur graphique effleuré.

10. Procédé (800) selon la revendication 9, dans lequel la fonction particulière comprend une ou plusieurs des suivantes :
le chargement d'une page web; le placement d'un appel auprès d'un utilisateur particulier ; l'ouverture d'une application d'e-mail pour composer un email à envoyer à une adresse particulière ; l'envoi d'un message multimédia à un dispositif utilisateur ; l'envoi d'un message instantané à un ou plusieurs dispositifs utilisateurs ; le chargement d'un document pour une édition ; la reproduction de musique ou de vidéo ; la programmation d'un rendez-vous ; ou l'insertion ou la délétion d'une entrée d'un carnet d'adresses.

11. Procédé (800) selon la revendication 9, dans lequel le procédé comprend en outre :
l'authentification (804) de l'utilisateur particulier sur la base de l'image.

12. Procédé (800, 700) selon la revendication 9, comprenant en outre :
la réception (702) des informations d'identification de l'utilisateur particulier ;
la capture (704) d'une image d'enregistrement du doigt ;
la création d'une association entre l'image d'enregistrement et les informations d'identification ;
le stockage (708) de l'image d'enregistrement, des informations d'identification et de l'association entre l'image d'enregistrement et les informations d'identification.

13. Procédé (800, 700) selon la revendication 12, comprenant en outre :
la création d'une association entre les informations d'identification, la fonction particulière et l'objet d'interface utilisateur graphique.

14. Procédé (800) selon la revendication 9, dans lequel la capture d'une image comprend :
l'obtention d'une image de veines du doigt ;
l'obtention d'une empreinte de doigt ; ou
l'obtention d'une forme du doigt.

15. Procédé (800) selon la revendication 9, dans lequel la capture d'une image comprend :
l'obtention de l'image sur la base d'au moins l'un(e) ou l'autre de la lumière réfléchie par le doigt, d'un signal infrarouge réfléchi ou d'un signal acoustique réfléchi.
